Europäisches Patentamt

European Patent Office

Office européen des brevets

(19)

(11) Publication number: **0 060 574**
**A1**

## (12) EUROPEAN PATENT APPLICATION

(21) Application number: **82200140.0**

(22) Date of filing: **08.02.82**

(51) Int. Cl.³: **G 01 T 1/167**

(30) Priority: **13.03.81 US 243482**

(43) Date of publication of application: **22.09.82**
**Bulletin 82/38**

(84) Designated Contracting States: **CH DE FR IT LI SE**

(71) Applicant: **UNC Nuclear Industries, Inc., 2900 George Washington Way, Richland Washington 99352 (US)**

(72) Inventor: **Lattin, Kenneth R., Keen Road, Richland Washington (US)**
Inventor: **Hanson, David E., 4203 W. Kenneinck Ave., Richland Washington (US)**

(74) Representative: **Munzinger, John Patrick, CH-1254 Jussy l'Eglise Geneva (CH)**

(54) **Portal type personnel radiation monitor.**

(57) A portal type radiation monitor designed to measure possible contamination of persons with radiation, in particular at nuclear sites and nuclear power stations. It includes a frame (10-15) fitted with an array of detectors (D1-D13) positioned adjacent the body parts most likely to need monitoring, including feet, hands and head. A measuring system (20-22) is provided for compensating for blackground radiation.

ACTORUM AG

## PORTAL TYPE PERSONNEL RADIATION MONITOR

This invention relates to a portal type personnel radiation monitor, especially adapted for scanning personnel who may be contaminated with radiation while passing through the monitor, detecting the presence of any radiation emanating from the personnel, and activating an alarm or display as a warning to the contaminated personnel.

Apparatus of the above-described type are commonly employed at nuclear sites, nuclear power stations and the like, to monitor individuals as they leave work locations where they might possibly have become contaminated. Two of the most common types are portal monitors which provide an overall check of the passing individual, and hand/shoe monitors which provide a more sensitive check of just the individual's hands and feet, two of the most probable contamination areas. Since the conventional portal monitor does not have the sensitivity to adequately check hands and feet, and since the hand/shoe monitor cannot check the remainder of the body, the exiting individuals have to use both types of monitors in succession to make an acceptable survey for contamination. This is a slow and cumbersome process, and delays the exiting of personnel from possibly contaminated areas.

In addition, the individual's head and face also have a high probability for contamination. But neither of the aforementioned conventional monitor types adequately check these portions of the user's anatomy for radiation contamination.

A further problem encountered in the detection of contamination is the random nature of radioactive decay and the variability of background radiation levels. This is particularly true for the low level sources represented by personnel contamination and the short counting intervals associated with portal monitoring. The problem is further complicated when this randomness is superimposed on real low level background variations, which can vary by a factor of 50 to 100 during the monitoring interval.

The chief object of the invention is an improved portal type monitor which eliminates or greatly reduces the shortcomings of the known installations.

This and other objects and advantages of the invention are obtained, briefly speaking, with a portal frame configuration dimensioned to allow individuals to pass through who are to be tested for radiation contamination. Mounted on or near the frame are a number of radiation detectors arranged in a novel manner so as to combine in a single apparatus the functions previously performed by several individual pieces of equipment, and in addition new functions heretofore not previously obtainable, to the best of our knowledge.

In particular, detectors are located on the floor of the monitor so that the individual's feet can be placed directly in contact with them. In addition, detectors are located along the portal sides so that the individual's hands can be placed directly in contact with them. Still further, detectors are located as close as practicable to the head and face of the user to give those anatomy portions the special monitoring they deserve.

As a further feature of the invention, displays warning the user of a contamination problem are located fore and aft of the monitor, so that the user can instantly observe a contamination warning regardless of which direction he is passing through the monitor.

Still a further feature of the invention is a measurement system connected to the various detectors and operated to detect a level of contamination which is substantially independent of the background level and also allows the counting interval to be extended for better statistical averaging without distorting the background signal.

These and other features and advantages of the invention will become apparent from the following detailed description of a preferred embodiment of the invention, taken in conjunction with the accompanying drawings, wherein :

Figure 1 is a front elevational view of one form of portal monitor in accordance with the invention, combined with a schematic block diagram of the measurement system;

Figure 2 is a side elevational view of the portal monitor of Figure

1, but without the connected measurement system;

Figure 3 is a simplified schematic block diagram of the measurement system of the portal monitor of Figure 1; and

Figure 4 is a flow chart of part of the program for a computerized version of the measurement system of Figure 3.

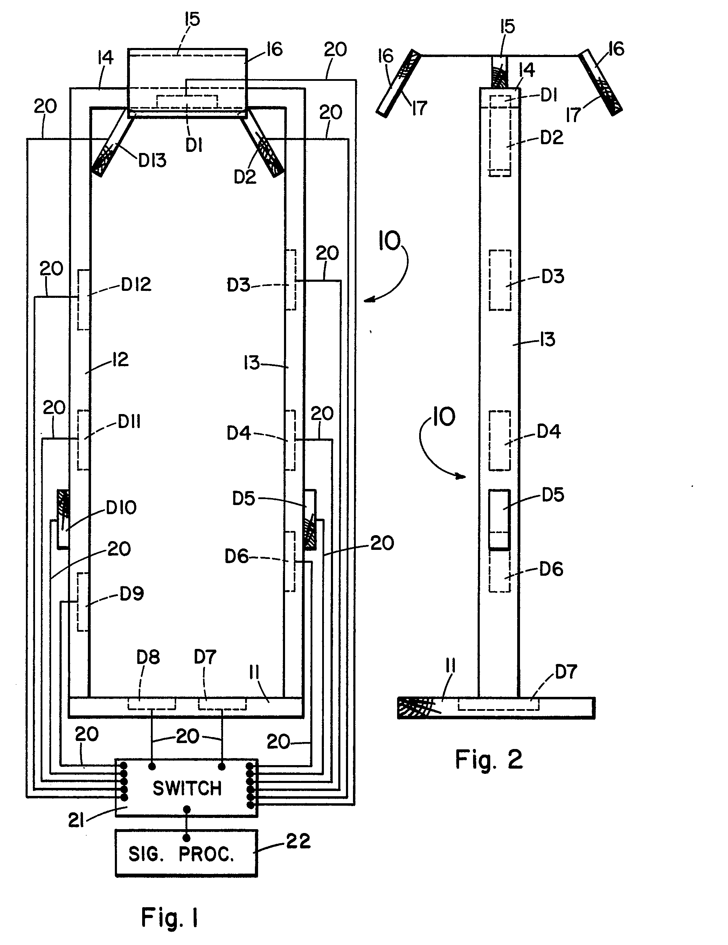

Figures 1 and 2 are front and side elevational views of the supporting structure of the present invention showing radiation detectors in position. In these figures, a frame 10 of wood or similar structural material, is placed to require that a person leaving a radiation area pass through frame 10. This would make it easy to detect by means such as photoelectric detectors whether that person had paused for a proper measuring interval. The frame 10 comprises a floor section 11, two upright vertical posts 12, 13, and a top or ceiling section 14. Mounted on top of the ceiling section 14 is a T-shaped supporting structure 15 at whose ends are mounted suitable display devices 16 and tilted at angles so that the display faces 17 will be visible to the user. As will be noted from Figure 2, the fore and aft mounting of the displays 16 will allow the user to view one of the displays 16 regardless of which direction he passes through the portal structure, i.e., whether from right to left, or from left to right in Figure 2.

A number of detectors D1-D13 are mounted on the frame 10. The detectors are of the well-known Pancake type available from commercial suppliers and sensitive to radiation over a wide range of energies. One suitable form is a gas proportional counter tube capable of detecting Carbon-14, Promethium-147, and Cobalt-60 radiation, available from commercial suppliers. As is well known, suitable lead shielding (not shown) can be used to encase the back and sides of each detector to reduce background count and to directionalize sensitivity to the detector's front face.

As will be observed, one detector D1 is mounted in the ceiling section 14 with its sensitive side facing downward. Two detectors D7 and D8 are mounted in the floor section with their sensitive sides facing upward. On the right post are mounted three detectors D3, D4 and D6 with their sensitive sides facing inwardly. On the left post are mounted three detectors D9, D11 and D12 with their sensitive sides facing inwardly. The side detectors are shown non-symmetrically arranged to cover as completely as possible the legs and body of the user. If desired, they can be symmetrically arranged at the same heights. Two detectors D2 and D13 are located in the upper right and left corners, respectively, with their sensitive sides facing inward and tilted downward. The detector D1, and canted detectors D2 and D13 serve to detect contamination from the user's head and face and shoulders.

Two detectors D5 and D10 are mounted, respectively, on the outside of the sides 13 and 12 of the frame. In this case, their sensitive sides face outwardly. These two detectors are located so that a user standing within the frame 10, with his feet standing over the floor detectors D7 and D8, can place his hands palm down on the outside detector D5 and D10. If desired, a second detector (not shown) can be mounted just outside of each of the hand detectors D5 and D10 to form a space dimensioned to accommodate a hand of the user. In this latter case, with extra detectors facing toward the shown detectors, both sides of the user's hands can be monitored simultaneously.

The measurement is effected according to the following procedure. The apparatus may first be given an instruction to prepare for measurement. This may be done by means (not shown) such as a card reader located on or near the frame and which may receive an identification card to be inserted by the person entering frame 10 or it may be done by switches (not shown) connected to the foot detectors D7 and D8. In either case, a person leaving a radiation area enters frame 10, stands on foot detectors D7 and D8, and places one hand on each of the hand detectors D5 and D10. The separate hand detectors are used as mentioned, because of the increased probability of exposure of the hands to radioactive contaminants. While the person is standing on the foot detectors, he is exposed to the array of surrounding detectors. It will be understood that, while thirteen separate detectors D1-D13 are shown in Figure 1, this was simply a number of convenient choice for one particular embodiment of the present invention. The important features of the detector placement in Figure 1 are that there be foot detectors D7, D8, hand detectors D5, D10, and an array of further detectors that respond to radiation from radioactive isotopes in or on the rest of the user's body.

Frame 10 also includes the display means 16 for delivering a message to the subject who enters frame 10 to be monitored. This may be of any well-known type capable of displaying messages on its viewing face 17. These messages may normally include an instruction to wait while calculations are being performed, a clear message, and a radiation warning coupled if desired to an audible alarm. It may also be desirable to display an identification number or name of the subject if this is obtained from the card reader and it may be desirable to advise the subject to leave his hands in measuring proximity to both of the hand detectors. Suitable circuitry to achieve this will be evident to those skilled in this art. The displays 16 can easily be seen if placed high enough to clear the head of a subject who is standing within the frame 10.

Figure 1 also schematically shows a measuring system connected to the array of detectors. The connections to each of the detectors D1-D13 are shown schematically by electrical lines 20 which terminate at a block 21 labelled as a switch, which in turn is connected to a block 22 labelled signal processor. The detectors are supplied, as is well-known, with suitable operating voltages (not shown), and generate signal pulses or counts in response to radiation. Essentially, the signal processor 22 processes the detector signal within a system that also measures background radiation over a fixed time interval and then determines whether enough radiation has been detected above the background level to warrant warning the user.

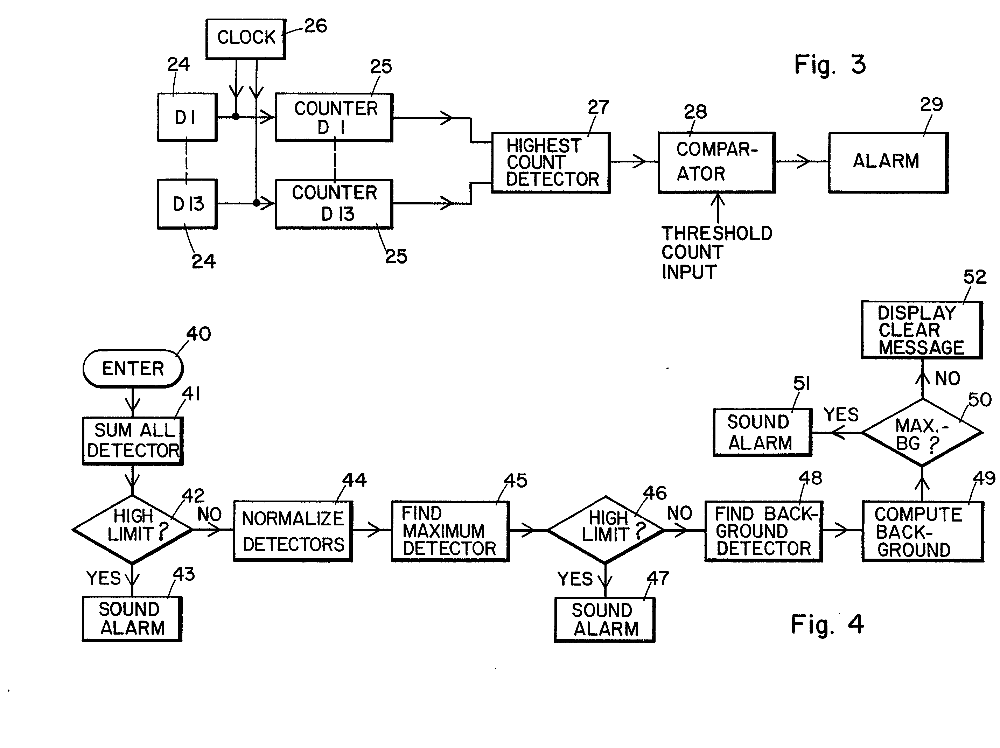

Figure 3 is a simplified schematic block diagram illustrating one way of executing a suitable measurement. The blocks 24 on the left labelled D1 and D13 represent the end detectors of the array. The dashed vertical line represents the remaining detectors D2-D12. Not shown is conventional electronic circuitry to convert the signals from each of the detectors into countable electrical pulses. The output from each detector is connected to a separate pulse counter 25 labelled counter D1 through counter D13. A clock 26 is shown schematically connected to the counters 25, and symbolizes during a monitoring cycle resetting and enabling all the counters 25 at the same instant of time, and after a fixed time interval, disabling the counters 25, which retain or hold the accumulated pulse count of each detector of the array. As is well known, the counter outputs can be an analog voltage, or a digital word. The counter outputs are connected to a block 27 labelled highest count detector, which merely functions to determine or find which of the counters 25 has the highest recorded count. Circuitry to perform this simple function is available from commercial outlets. The output of the highest count detector 27 is connected to a known two input comparator 28, the second input of which is labelled threshold count input. Should the highest count detected exceed the threshold level input, a signal is outputted to set off a suitable alarm 29 or flash a warning message on displays 16.

The threshold value inputted represents the background radiation. Thus, no warning results unless the background is exceeded. The background level can be obtained from several sources. The simplest embodiment is a fourteenth detector which is mounted on or near the frame but is completely shielded from the person using the portal monitor. Thus, this additional background detector only measures background. It can be connected to its own counter, simultaneously reset, and enabled at the same time as the other counters 25 and for the same clock controlled fixed time interval. The analog or digital signal representing the accumulated count from the background detector is then connected to the second threshold input. In this simple system illustrated in Figure 3, using an independent detector, monitoring the background during the same time interval, subtracting the latter from the highest count detector, monitoring the user yields a level of contamination which is independent of background level. It also allows the counting interval to be lengthened for better statistical averaging without distorting the background signal. This is important because occasional abrupt background changes of as much as 20-30 % can occur in a matter of seconds, and it is not possible with prior art equipment to obtain statistically stable measurements in too short counting intervals, say under 5 seconds, due to the low level contamination sensitivity that is desired.

While the above described system will be operable, for best results it requires that the background detector either be normalized or have a sensitivity equal to that of the detector producing the highest count from the user. We prefer to normalize the detectors, which, as is well known, simply requires that before the user steps into the portal, one arbitrary detector, say D1, be selected and its signal S1, over a fixed measuring interval, be measured. The signals S2-S13, and S(BG) (where BG stands for the background detector), obtained from the other detectors over the same interval, are then divided in S1 to obtain normalized signal values from all the other detectors in the system. This simple calculation can be carried out by simple hard-wired logic circuitry connected in Figure 3 between each of the counters 25 and the highest count detector 27 so that the values inputted during the monitoring mode to the latter are normalized and will enable it to find the highest normalized count, and similar circuitry utilized with the background monitor so that its input to comparator 28 is also normalized.

Instead of using an additional fully-shielded detector as the background monitor, in view of the large number of detectors available in the array, we prefer to use one of the existing array detectors D1-D13 as the background detector, but chosen from the side of the array opposite to the side where the highest count detector is located. This is feasible because even though a person would be uniformly contaminated on all sides, this condition would have been detected previously by comparing the sum of all detectors with the gross contamination limit. This has the advantage of eliminating the need for an additional detector.

For instance, suppose that a person steps into the portal with contamination near D11 (Figure 1). At the end of the monitoring interval, highest count detector 27 (Figure 3) records the value of D11. As before, suitable hard-wired logic circuitry can be provided, as will be evident to those skilled in this art, to identify the counter with the highest count, in this case D11, and derive the background count to be inputted as the second threshold input of the comparator 28 from the opposite or complementary detector, D4 in this case. This is easily accomplished by simply pairing each detector in the array with an oppositely located detector such that when one of the pair produces the highest count input to comparator 28, then the output of its complement would constitute the second input to the comparator 28. Thus, in the example, if the signal count from D11 exceeds that from D4 by a specified amount, then the alarm is sounded. Similarly, if the D8 or D7 highest count exceeds that of, say, D1 by the desired amount, again an alarm is sounded.

It will also be evident to those skilled in the art that microprocessor controls can be substituted for the hard wire systems so far described. Modern microprocessors, such as the Motorola M6800, are sufficiently fast to operate, in real time for a suitable monitoring interval of five seconds, the portal monitor illustrated in Figure 1. One advantage obtained is that the same counter unit can be employed to count for all of the detectors D1-D13, thereby eliminating twelve of the counting units. In addition, if desired, more sophisticated analysis schemes are possible to increase measurement reliability. In a typical microprocessor controlled system, the outputs from each detector unit, after suitable amplification and pulse shaping, would be coupled to the inputs of a standard peripheral interface adaptor (PIA) for use with the M6800 microprocessor. Each time an event occurs during the monitoring interval, causing a detector to generate a pulse, the PIA would temporarily store the pulse in one of its registers and the identification of the detector which generated the pulse. A standard software polling routine associated with the M6800 would continuously poll at high speed this receiving PIA and accumulate in a M6800 register, dedicated to that detector or local memory, the accumulated count received from each detector. This polling is symbolized by the switch-labelled block 21 in Figure 1. At the end of the monitoring interval or counting period determined by the clock, the total counts received by each detector will have accumulated in the microprocessor memory as a binary number or digital word. This data is then analyzed or processed as indicated in connection with the description of Figure 3 to determine if a statistically significant radiation level is present at any one of the detectors. As previously explained, to correct for differing sensitivities of the detectors, normalization factors are calculated from counting data obtained when the portal is unoccupied, and from the detector readings obtained during user use appropriately adjusted by the normalization factor. It is possible to take advantage of this normalization routine to check the reliability of the hardware. For instance, if the calculated normalization factors are abnormal or outside an expected range of values, a potential problem such as electronic drift or contamination of the equipment might be indicated warranting the attention of an attendant.

Figure 4 illustrates the significant portion of a program flowchart illustrating a typical program flow of a microprocessor-controlled measurement system. Not shown are preliminary standard routines to initialize the system, and optional routines to check operation of the system between uses and to provide suitable messages to the user to instruct how to use the equipment. The first flowchart block 40 labelled 'Enter' indicates all preliminary checks have been satisfactory, the normalization factors have been calculated and stored in memory, the count storage registers or memory locations reset to zero, the user has entered the portal monitor, the clock turned on to initiate the monitoring interval, the detector counts accumulated and stored in their respective registers or memory locations, and the clock turned off terminating the monitoring interval. As a preliminary optional step, all of the detector counts can now be summed, indicated in Figure 4 by block 41. In the next step, indicated by decision diamond 42, the count sum is compared to an arbitrary number stored in memory, and if it exceeds the arbitrary number, an alarm 43 is sounded to indicate the overall radiation level has exceeded a maximal level. Assuming this test is passed, the program flow proceeds to the next block 44 which adjusts the stored individual detector counts to their normalized values as explained above. In the next step indicated by block 45, a standard sorting routine is executed to identify the detector having the highest normalized count. Again, as an optional feature, this highest count can be compared with an arbitrary maximum value stored in memory illustrated by decision diamond 46, and if that maximum value is exceeded, again an alarm 47 is sounded.

Assuming once again that this last test is passed, the program flow continues to the next block 48 representing identification of a background detector and its accumulated count. As previously explained, the background detector of the array would be the complement detector located opposite the detector having the maximum count. This, as will be evident, is easily accomplished by a stored look-up table in memory that pairs each detector of the array with its complement. The next block 49 symbolizes a further option in which several, for example three, complement detectors can be identified for each array detector, and the background level calculated by averaging the counts of the three complement detectors. Once the background count has been determined in the next block, decision diamond 50; the maximum detector count is compared with the calculated background count, i.e. the latter value subtracted from the former value, and if the difference exceeds an arbitrarily selected stored value, the alarm 51 is again sounded to indicate the acceptable contamination level has been exceeded. Finally, assuming this test has been passed, the program exits by displaying a clear message to the user.

It will be evident to one skilled in this art that achievement of the required program details to implement the illustrated flow chart is well within the skill of the average programmer familiar with microprocessor-controlled equipment, and further that other program schemes with appropriately designed hardware to operate the described and illustrated portal monitor in accordance with the principles outlined above are deemed to be within the scope of our invention.

As will be evident, the described and illustrated monitor offers a number of advantages over the prior art arrangements. Besides carrying out all of the desired monitoring within a single device, which allows the hands and feet to come into direct contact with detectors dedicated to detecting radiation from those appendages, several detectors are placed as close as practical to the head and face to give them the special monitoring they deserve. In addition, the illustrated configuration offers several advantages which facilitate and ensure its use. Unlike a conventional hand and shoe monitor, this configuration need not significantly interrupt an individual's course of travel nor does it require any effort beyond maintaining an upright position with the hands at the frame sides. Usage of the monitor is easily enforced by placing the monitor in the wall or doorway through which personnel must pass when leaving specified areas. Still further, the described and illustrated monitor lends itself to inexpensive construction and thus wide use within those kinds of facilities that require this kind of equipment to ensure safety of personnel. Finally, real time monitoring of low-level contamination can be achieved with real time corrections for sensitivity and simultaneously occurring variations in background radiation levels.

The monitor described herein was made in the course of, or under, contracts with the United States Department of Energy, Nos EY-76-C-06-1857 and E(45-1)-1857.

While our invention has been described in connection with specific embodiments thereof, those skilled in the art will recognize that various modifications are possible within the principles enunciated herein and thus the present invention is not to be limited to the specific embodiments disclosed.

CLAIMS

1.   A portal radiation monitor comprising means forming an upright frame structure through which an individual can pass, said frame structure having a floor portion, opposed side portions and a top portion, a plurality of radiation detectors capable of detecting the presence of radiation and generating an electrical signal in response to said radiation, characterized in that  at least one of said radiation detectors is located at the frame floor portion in a position underlying both feet of the individual when the latter stands on the floor portion, others of said radiation detectors are locat ed along both opposed frame side portions in positions such that the individual can place one hand on each of said radiation detectors when the individual stands on said frame floor portion, others of said radiation detectors are located near the upper part of said frame structure in positions where they can detect radiation from the individual's head when the individual stands on said frame floor portion, and means are connected to the plurality of detectors for indicating the presence of radiation emanating from the individual.

2.   A portal radiation monitor as claimed in claim 1, characterized in that two adjacent broad-area radiation detectors are located at the frame floor portion, each of which is configured to accommodate one foot of the individual when standing on the said floor portion.

3.   A portal radiation monitor as claimed in claim 1 or 2, characterized in that the hand-radiation detectors are each located on the outside of the frame structure in a position for each to receive one hand of the individual when standing on the floor portion.

4.   A portal radiation monitor as claimed in any of claims 1 to 3, characterized in that the head-radiation detector comprises two broad-area radiation detectors located at the right and left upper corners of the frame structure.

5.   A portal radiation monitor as claimed in any of claims 1 to 4, characterized in that it further comprises at least one other radiation detector located along the frame side portions in a position for detecting radiation emanating from the legs or body of the individual when standing on the floor portion.

6. A portal radiation monitor as claimed in any of claims 1 to 5, characterized in that the indicator means comprises display means mounted fore and aft on the frame structure for displaying to the individual, regardless of which direction he faces, a visible warning of the detection of radiation from his person.

7. A portal radiation monitor as claimed in claim 1, characterized in that the indicating means connected to the detectors comprises means for determining the detector producing the maximum count, and means for comparing the maximum detector count with a count representing the background level of radiation.

8. A portal radiation monitor as claimed in claim 7, characterized in that means are provided for deriving the background count from at least one of said detectors located on the frame opposite to the detector producing the maximum count, further means being provided to enable all of said detectors for the same time interval.

9. A portal radiation monitor as claimed in claim 8, characterized in that means are provided to correct the detector accumulated counts for differing detector sensitivity before comparing the maximum and background counts.

10. A portal radiation monitor comprising means forming an upright frame structure through which an individual can pass, said frame structure having a floor portion, opposed side portions and a top portion, an array of radiation detectors capable of detecting the presence of radiation and generating an electrical signal in response to said radiation, characterized in that said array is mounted on said frame in positions such that the major parts of an individual's anatomy can be monitored for contamination when the individual stands within said frame, and comprising means for enabling said radiation detectors for a short time interval, means for determing the count occurring during said short time interval from a radiation detector having a high count, means for determining the count during said same time interval from another radiation detector representing the background level, and means for comparing the high count with said background count for indicating the presence of an undesirable level of radiation emanating from the individual.

11. A portal monitor as claimed in claim 10, characterized in that said another radiation detector is located in a position opposite to said high count detector.

12. A portal monitor as claimed in claim 10 or 11, characterized in that means are provided to normalize the high count and background count before comparing same.

0060574

1/2

Fig. 1

Fig. 2

Fig. 3

CLOCK —26

24

D I

D 13

24

25

COUNTER D I

COUNTER D 13

25

27

HIGHEST COUNT DETECTOR

28

COMPAR-ATOR

29

ALARM

THRESHOLD COUNT INPUT

40

ENTER

41

SUM ALL DETECTOR

42

HIGH LIMIT ?

NO

44

NORMALIZE DETECTORS

45

FIND MAXIMUM DETECTOR

46

HIGH LIMIT ?

NO

48

FIND BACK-GROUND DETECTOR

49

COMPUTE BACK-GROUND

50

MAX.-BG ?

YES

51

SOUND ALARM

NO

52

DISPLAY CLEAR MESSAGE

YES

43

SOUND ALARM

YES

47

SOUND ALARM

Fig. 4

0060574

| Category | DOCUMENTS CONSIDERED TO BE RELEVANT | | CLASSIFICATION OF THE APPLICATION (Int. Cl. 3) |
|---|---|---|---|
| | Citation of document with indication, where appropriate, of relevant passages | Relevant to claim | |
| X,Y | FR - A - 2 311 319 (HARTMANN & BRAUN AKTIENGESELLSCHAFT)  <br><br>* page 1, lines 1-16; page 2, line 11 - page 3, line 17; figure 1 *  <br><br>-- | 1-6,10 | G 01 T 1/167 |
| Y | US - A - 3 670 164 (R.W. HARDY et al.)  <br><br>* abstract; column 1, lines 44 to 68; column 2, line 46 to column 3, line 38, line 69 to column 4, line 34; figures 1,2 *  <br><br>-- | 5,7-11 | TECHNICAL FIELDS SEARCHED (Int.Cl. 3)  <br><br>G 01 T |
| A | GB - A - 1 013 755 (COMMISSARIAT A L'ENERGIE ATOMIQUE)  <br><br>* page 1, lines 20-58; page 2, lines 12-35, line 109 - page 3, line 48, lines 60-100, line 127 - page 4, line 21; figures 1 to 3 *  <br><br>-- | 5,10 | |
| A | FUNKSCHAU, volume 23, 1974 MUNCHEN (DE) "Personenmonitor" page 899  <br><br>* the entire article *  <br><br>-- | 1-6 | CATEGORY OF CITED DOCUMENTS  <br><br>X: particularly relevant if taken alone  <br>Y: particularly relevant if combined with another document of the same category  <br>A: technological background  <br>O: non-written disclosure  <br>P: intermediate document  <br>T: theory or principle underlying the invention  <br>E: earlier patent document, but published on, or after the filing date  <br>D: document cited in the application  <br>L: document cited for other reasons |
| A | PROC. SIXTH TRIPARTITE INSTRUMEN-TATION CONFERENCE, part 2 April 1959, AECL-802, paper 2-18 CANADA  <br><br>./. | | |
| | | | &: member of the same patent family, corresponding document |

The present search report has been drawn up for all claims

| Place of search | Date of completion of the search | Examiner |
|---|---|---|
| The Hague | 26-05-1982 | DATTA |

EPO Form 1503.1 06.78

| European Patent Office | **EUROPEAN SEARCH REPORT** | 0060574 Application number |
|---|---|---|
| | | EP 82 20 0140 |

-2-

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | H.S. SANDERS et al. "Walk-over shoe monitor" pages 103-105<br><br>* the entire article; figures * | 2 | |
| | ---------- | | |
| | | | **TECHNICAL FIELDS SEARCHED (Int. Cl.³)** |